# EUROPEAN PATENT SPECIFICATION

(11) **EP 1 564 371 B1**
(45) Date of publication and mention of the grant of the patent: **27.04.2011**
(21) Application number: 05250688.8
(22) Date of filing: 07.02.2005
(51) Int. Cl.: F01D 5/00, B23P 6/00, B23K 15/00

(54) **Method of repair a foot of a cast stator vane segment**
Reparaturverfahren einen Fuß aus einem gegossenen Statorschaufelsegmente
Procédé de réparation d'un pied d'un segment d'aubes statoriques coulé

(30) Priority: 10.02.2004 US 775905
(43) Date of publication of application: 17.08.2005
(73) Proprietor: United Technologies Corporation, East Hartford, CT 06108 (US)
(72) Inventor: Mussen, Ramsey, Winchester, CT 06098 (US)
(74) Representative: Hall, Matthew Benjamin

(56) References cited:
- EP-A- 1 153 699
- FR-A- 2 449 508
- US-A- 5 272 809

## Description

This invention relates to a cast article, such as a stator assembly of the type used in rotary machines, and more particularly, to the repair of areas of such articles having limited access, such as a a foot of a cast stator vane segment according to the preamble of claim 1.

Typical axial flow rotary machines, such as those found in gas turbine engines for aircraft; have a series of sections. Each section has an array of cast stator vane segments disposed upstream of an array of rotor blades in both the compressor section and turbine section of the engine. Stator assemblies normally include an outer casing with inwardly directed vanes that end in sealing elements, such as an inner shroud assembly. Both the outer casing and inner shroud extend circumferentially around the working medium flow path through the machine. The arrays of cast stator vane segments found in a stator assembly are designed to interact with the working medium gases that flow through the engine.

The extreme temperatures found in the compressor section of the engine along with other operating conditions (e.g. vibration) can cause wear and damage to parts within this section. Due to the difficulty of accessing various areas of these parts that may have been worn or damaged during operation, conventional practice has been to replace rather than attempting to repair these parts. Additionally, the conditions these parts will encounter in service preclude the use of brazing or standard welding techniques to repair them. A repair technique that can return damaged cast stator vane assemblies to service in such an environment is greatly desired.

United States patent publication US-A-5,272,809 discloses a repair method according to the preamble of claim 1, in particular a method of repairing a damaged retaining lug provided on an outside diameter platform of a cast stator vane in which the damaged lug is first removed by machining, and an oversized retaining lug blank, made of a wrought alloy corresponding to that of the cast stator vane, is bonded to the cast stator vane using a solid state bonding technique, for example by forge joining. The blank may then be heat treated and machined to a final configuration. US-A-5,272,809 teaches strongly against the use of any welding technique when repairing retaining sections of cast stator vanes.

French patent application publication FR-A-2 449 508 discloses a method of repairing and refinishing rotor blade airseals and European patent application publication EP-A-1 153 699 discloses a method of repairing damaged sections of rotor blades provided integrally formed with the perimeter of a rotor disk in a unitary blisk configuration. These documents disclose the use of electron beam welding in such repairs.

The present invention provides a method of repairing a foot of a cast stator vane segment, the method comprising the steps of: removing a portion of a foot from a cast stator vane segment; securing a replacement foot section onto the cast stator vane segment; heat treating the replacement foot section and cast stator vane segment; and machining the replacement foot section to a suitable shape; characterised in that the step of securing the replacement foot section comprises securing the replacement foot section onto the cast stator vane segment by tack welding, then securing the replacement foot section onto the cast stator vane segment using an electron beam weld.

Certain preferred embodiments will now be described in greater detail by way of example only and with reference to the accompanying drawings in which:
FIG. 1 is a side elevational view in partial section of an axial flow rotary machine, such as a gas turbine aircraft engine;
FIG. 2 is an enlarged detailed view of a portion of the high pressure compressor section of the engine shown in FIG. 1;
FIG. 3 is an enlarged isometric view of a portion of the high pressure compressor section of the engine shown in FIG. 1;
FIG. 4 is a schematic view of a foot requiring repair;
FIG. 5 is a schematic view of the foot of FIG. 4 with an area removed;
FIG. 6 is a schematic view of the foot of FIG. 5 with a replacement foot section;
FIG. 7 is a schematic view of the foot and the replacement foot section of FIG. 6 welded together; and
FIG. 8 is a schematic view of the foot and the replacement foot of FIG. 7 after machining.

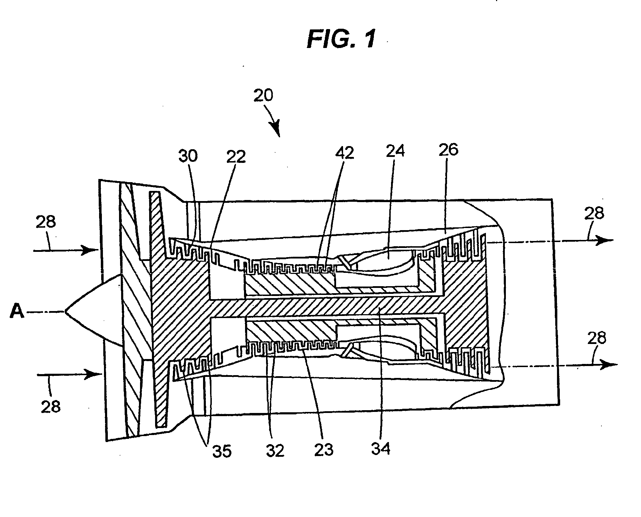

FIGS. 1-3 show portions of an axial flow rotary machine, such as a gas turbine aircraft engine 20. The engine 20 includes a compressor section 22, a high pressure compressor section 23, a combustion section 24, and a turbine section 26. The engine is disposed about an axis of symmetry A and has a flow path 28 for working medium gases that extends axially through the sections of the engine 20.

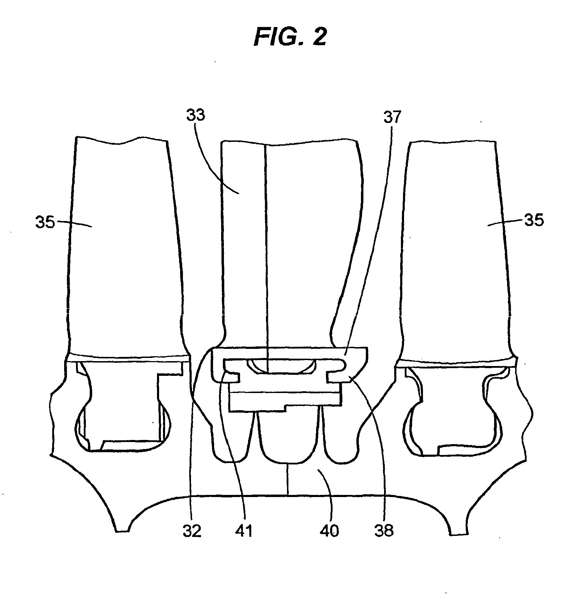

With reference to FIG. 2, a stator assembly 30 including an array of cast stator vane segments 32 (only one vane 33 is shown) is located in the engine 20. A rotor assembly 34 includes an array of rotor blades 35 (only two blades are shown) that extends radially outward across the working medium flow path 28. The rotor assembly 34 is supported by various static bearing assemblies within the engine 20. The stator assembly 30 includes an outer case (not shown) that acts as a pressure vessel to confine the working medium gases to the working medium flow path 28.

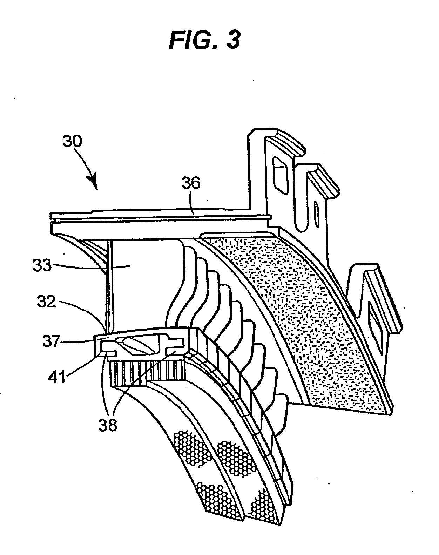

With particular reference to FIG. 3, each cast stator vane segment 32 has an outer platform 36, an inner platform 37, and one or more vanes ("airfoils") 33 extending between the platforms 36, 37. The inner platform 37 is typically comprised of feet 38 that are disposed circumferentially with respect to the axis of symmetry A. The cast stator vane segment 32 extends between the outer case and an inner shroud 40. The inner shroud 40 has corresponding projections that extend into the grooves formed by the feet 38. By combining a plurality of stator assemblies 30 circumferentially throughout the compressor, high pressure compressor, and turbine sections 22, 23, 26 of the engine 20, the cast stator vane segment 32 interacts with the working medium gases to direct the flow downstream to the rotor blades 35. The stator vane segment can be made from any suitable alloy, such as a high temperature nickel-based alloy.

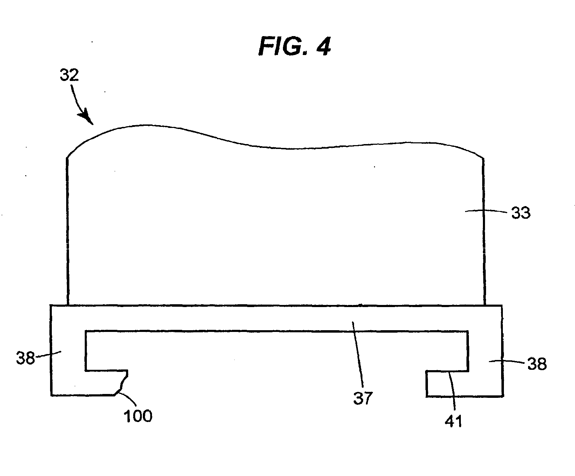

During use, aerodynamic and thermal forces can cause stresses in the stator assemblies 30. Such stresses may cause the stator assembly 30 to be worn down or crack. If there is limited access to such worn areas, conventional weld build-up techniques cannot repair the location. In particular, a narrow groove portion 41 on the foot 38 is not accessible with conventional welding techniques. FIG. 4 shows an example of a damaged portion 100 on the foot 38 of the stator assembly.

Therefore, one advantage to the disclosed embodiment of the present invention is the ability to repair inaccessible locations. In a preferred embodiment, the inaccessible location would be the feet 38 of later stage stator assemblies 42 in the high pressure compressor section 23 of twin spool turbine engines. For example, the feet 38 of the 12^{th} and 13^{th} stator vane segments in a Pratt & Whitney 4000 high pressure compressor could be repaired. It is also envisioned that any stator assembly 30 within the engine 20 of like material or configuration can be repaired with the present embodiment of the invention. Additionally, because typical welding and brazing process temperatures would exceed the heat treatment specifications of the materials and weaken the repaired part, typical welding and brazing cannot be successfully used to repair the above stator vane segments 32.

The disclosed embodiment of the present invention utilizes electron beam welding to realize new advantages in stator foot 38 repairs. Electron beam welding is a fusion joining process that produces a weld by impinging a beam of high energy electrons to heat the weld joint. Some of the distinct advantages to using the electron beam welding process are the low distortion effects and the ability to have a narrow heat affected zone. By using an electron beam welding process, the feet 38 of later stage stator assemblies 42 in the high pressure compression section 23 can now be repaired instead of being replaced. Additionally, the use of an electron beam weld allows an increased area of the foot 38 to be replaced in both compressor sections 22, 23 of the engines 20 by creating a stronger and more stress resistant weld than other conventional techniques. An example of a suitable electron beam welding apparatus is a Leybold-Heraeus W-3 electron beam welder.

In one embodiment of the present invention, an operator locates the foot 38 on the cast stator vane segment 32 requiring repair. It is envisioned that each foot 38 may have different tolerance limitations for the determination of whether the foot 38 is damaged enough to necessitate being repaired, is too damaged and must be replaced, or can be reused without repair.

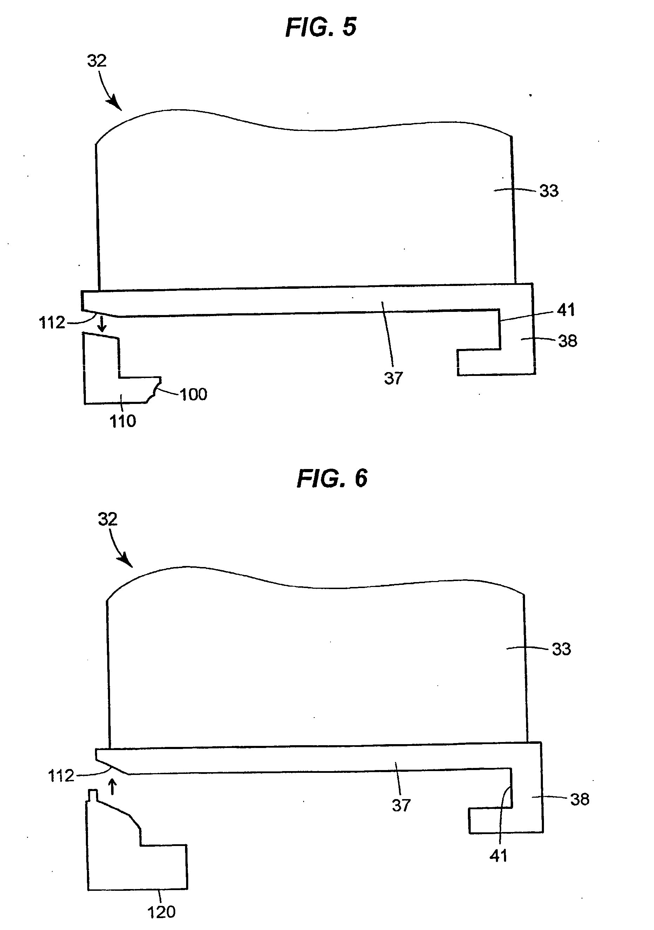

Once it is determined that the foot 38 can be repaired, the damaged portion 100 is then removed from the foot 38 using, for example, conventional machining techniques. When removing the damaged portion 100, an area 110 is removed that is typically of greater size than the damaged portion 100, as can be seen in FIG. 5. The area 110 is separated from the foot 38 at a cut line 112. By removing a larger portion of the foot 38, the operator can also remove any localized defects that may exist near the damaged portion 100. Another benefit of removing a larger area 110 is the ability to position the cut line 112 in the foot 38 so as to maximize the effectiveness of the welding to be performed on the foot 38.

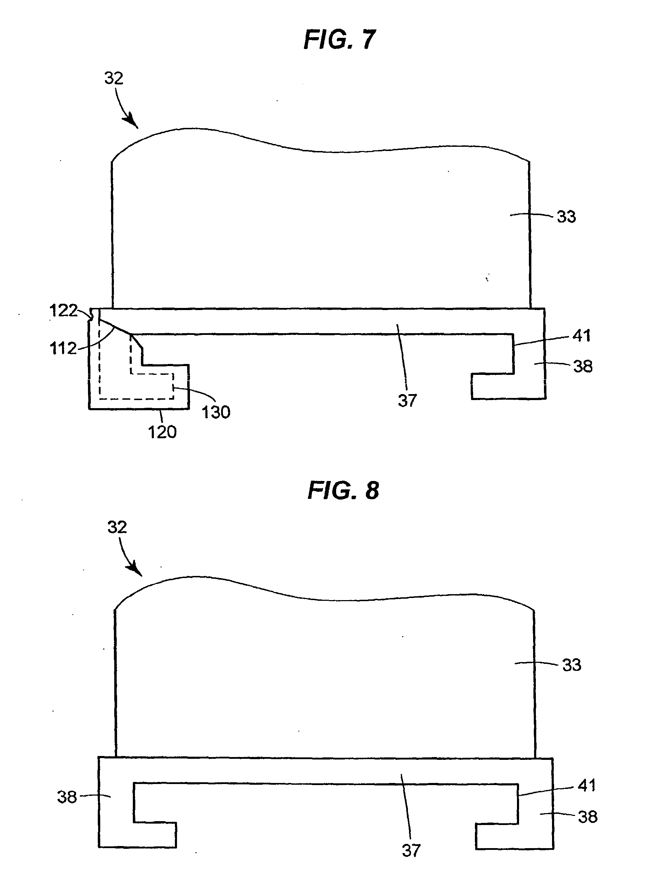

FIG. 6 shows how in one embodiment a replacement foot section 120 is moved towards the cut line 112 of the foot 38. The replacement foot section 120 is then tack welded onto the foot 38 using conventional low temperature welding techniques. The joint at cut line 112 is then electron beam welded to secure the replacement foot section 120 onto the foot 38, as can be seen in FIG. 7. A groove 122 may form in the replacement foot section 120 during the electron beam welding process. This is because the material has been drawn in between the replacement foot section 120 and the foot 38 at the cut line 112. After welding, the vane segment 32, including the replacement section 120, are heat treated to relieve any stress build-up during the electron beam welding process. One skilled in the art will know how to weld and how to heat treat the pertinent areas for repair of the foot 38.

FIG. 7 shows the electron beam welded replacement foot section 120 attached to the foot 38. Cut-out lines 130 are shown where the replacement foot section 120 is to be machined. Those skilled in the art will know how to machine the replacement foot section 120 to the appropriate tolerances. FIG. 8 shows the foot 38 after having been successfully repaired using the present method.

Numerous modifications to the present invention will be apparent to those skilled in the art in view of the foregoing description. Accordingly, this description is to be construed as illustrative only and is presented for the purpose of enabling those skilled in the art to make and use the invention and to teach the best mode of carrying out same. The exclusive rights to all modifications which come within the scope of the appended claims are reserved.

## Claims

1. A method of repairing a foot (38) of a cast stator vane segment (33), the method comprising the steps of:
removing a portion (100) of a foot from a cast stator vane segment;
securing the replacement foot section (120) onto the cast stator vane segment (32);
heat treating the replacement foot section (120) and cast stator vane segment (32); and
machining the replacement foot section (120) to a suitable shape **characterised in that** securing the replacement foot section (120) onto the cast stator vane segment (32) is initially done by tack welding, then by securing the replacement foot section (120) onto the cast stator vane segment (32) using an electron beam weld.

2. The method of claim 1, wherein the cast stator vane segment (32) is located in compressor section (22) of an engine (20).

3. The method of claim 2, wherein the cast stator vane segment (33) is located in a high pressure compressor section (23) of an engine (20).

4. The method of claim 3, wherein the cast stator vane segment (32) is a later stage cast stator vane segment.

## Patentansprüche

1. Verfahren zur Reparatur eines Fußes (38) eines Gussstatorschaufelsegments (33), wobei das Verfahren die Schritte umfasst:
Entfernen eines Bereichs (100) eines Fußes von einem Gussstatorschaufelsegment;
Anbringen des Ersatzfußbereichs (120) auf dem Gussstatorschaufelsegment (32);
Hitzebehandeln des Ersatzfußbereichs (120) und des Gussstatorschaufelsegments (32); und
Bearbeiten des Ersatzfußbereichs (120) zu einer geeigneten Gestalt,
**dadurch gekennzeichnet, dass** das Anbringen des Ersatzfußbereichs (120) an dem Gussstatorschaufelsegment (32) zunächst durch Heftschweißen, dann durch Befestigen des Ersatzfußbereichs (120) an dem Gussstatorschaufelsegment (32) durch Verwendung einer Elektronenstrahlschweißung ausgeführt wird.

2. Verfahren nach Anspruch 1, wobei das Gussstatorschaufelsegment (32) in einem Verdichterbereich (22) einer Maschine (20) angeordnet ist.

3. Verfahren nach Anspruch 2, wobei das Gussstatorschaufelsegment (33) in einem Hochdruckverdichterbereich (23) einer Maschine (20) angeordnet ist.

4. Verfahren nach Anspruch 3, wobei das Gussstatorschaufelsegment (32) ein Spätstufen-Gussstatorschaufelsegment ist.

## Revendications

1. Procédé de réparation d'un pied (38) d'un segment d'aube de stator coulé (33), le procédé comprenant les étapes suivantes :
retirer une partie (100) d'un pied d'un segment d'aube de stator coulé ;
fixer la section de pied de remplacement (120) sur le segment d'aube de stator coulé (32) ;
effectuer un traitement thermique de la section de pied de remplacement (120) et du segment d'aube de stator coulé (32) ; et
usiner la section de pied de remplacement (120) pour lui donner une forme appropriée, **caractérisé en ce que** la fixation de la section de pied de remplacement (120) sur le segment d'aube de stator coulé (32) est effectuée initialement par soudage de pointage, puis par fixation de la section de pied de remplacement (120) sur le segment d'aube de stator coulé (32) à l'aide d'une soudure par faisceau d'électrons.

2. Procédé selon la revendication 1, dans lequel le segment d'aube de stator coulé (32) est situé dans une section de compresseur (22) d'un moteur (20).

3. Procédé selon la revendication 2, dans lequel le segment d'aube de stator coulé (33) est situé dans une section de compresseur à haute pression (23) d'un moteur (20).

4. Procédé selon la revendication 3, dans lequel le segment d'aube de stator coulé (32) est un segment d'aube de stator coulé de stade ultérieur.
